# EUROPÄISCHE PATENTSCHRIFT

(11) **EP 3 377 801 B1**
(45) Veröffentlichungstag und Bekanntmachung des Hinweises auf die Patenterteilung: **29.01.2020**
(21) Anmeldenummer: 16794202.8
(22) Anmeldetag: 20.10.2016
(51) Int. Cl.: F16P 1/06, B23K 26/70

(54) **ANORDNUNG MIT ZUMINDEST EINER SCHUSSQUELLE UND ZUMINDEST EINER DETEKTORVORRICHTUNG**
ARRANGEMENT HAVING AT LEAST ONE SHOT SOURCE AND AT LEAST ONE DETECTOR DEVICE
ENSEMBLE COMPORTANT AU MOINS UNE SOURCE DE TIR ET AU MOINS UN DISPOSITIF DE DÉTECTION

(30) Priorität: 16.11.2015 AT 7292015
(43) Veröffentlichungstag der Anmeldung: 26.09.2018
(73) Patentinhaber: Fitz, Martin, 6890 Lustenau (AT); Köhlmeier, Erich, 6971 Hard (AT)
(72) Erfinder: Fitz, Martin, 6890 Lustenau (AT); Köhlmeier, Erich, 6971 Hard (AT)
(74) Vertreter: Fechner, Thomas
(86) Internationale Anmeldenummer: PCT/AT2016/000093
(87) Internationale Veröffentlichungsnummer: WO 2017/083890

(56) Entgegenhaltungen:
- DE-A1-102012 106 277
- DE-C1- 19 629 037
- US-A- 3 594 770
- US-A- 5 151 095

## Beschreibung

Die vorliegende Erfindung betrifft eine Anordnung gemäß des Oberbegriffs des Patentanspruchs 1.

Die Detektorvorrichtungen solcher Anordnungen werden z.B. als Laserschutzwände eingesetzt. Sie dienen zur Überwachung von Schussquellen in Form von Lasergeräten und zur Detektion, wenn ein Laserstrahl seinen vorgeschriebenen Arbeitsbereich durch Bedien- oder Programmierfehler oder dergleichen verlässt. Sie dienen somit als Sicherheitseinrichtung, um Gefährdungen von Mensch, Maschine und Umwelt abzuwenden. Z.B. kommen entsprechende Detektorvorrichtungen bzw. Laserschutzwände im Zusammenhang mit Schweißrobotern oder dergleichen zum Einsatz. Die Laserschutzwände bzw. Detektorvorrichtungen können z.B. dazu verwendet werden, eine Laserschutzkabine zu bilden, welche einen Schweißroboter oder andere Lasergeräte und dessen bzw. deren Arbeitsbereich ummantelt.

Beim Stand der Technik sind verschiedene Technologien bekannt. In der DE 10 2009 023 821 A1 wird z.B. vorgeschlagen, zu detektieren, wenn Leiterbahnen vom Laserstrahl durchtrennt werden. Die in der DE 10 2007 038 780 B3 gezeigte Anordnung besteht aus einem gattungsgemäßen Aufbau, wobei allerdings die elektrische trennende Schicht einen temperaturabhängigen ohmschen Widerstand aufweist. Gemessen wird in dieser Schrift der ohmsche Widerstand quer über die beiden elektrisch leitfähigen und die dazwischenliegende elektrisch trennende Schicht. In der DE 10 2007 038 780 B3 soll die Widerstandsmessung dazu dienen, eine temperaturbedingte Widerstandsänderung in der Serienschaltung aus elektrisch leitfähigen und elektrisch trennenden Schichten zu detektieren, bevor der Laser durch die Wand bzw. das Flächengebilde hindurchschießt.

Die DE 10 2012 106 277 A1 offenbart eine Laserschutzvorrichtung mit einem mehrschichtigen Aufbau, bei dem zwischen zwei elektrisch leitfähigen Schichten eine Schicht aus dielektrischem Material angeordnet ist. Gemessen wird die elektrische Leitfähigkeit zwischen den beiden elektrisch leitfähigen Schichten. Die US 5,151,095 A offenbart einen hierzu ähnlichen Aufbau.

Die EP 2 592 326 B1 zeigt einen gattungsfremden Aufbau, bei dem Leiterbahnen ausschließlich auf der von der Schussquelle bzw. vom Laser abgewandten Seite der elektrisch trennenden Schicht angeordnet sind. Laut dieser Schrift soll die elektrisch trennende Schicht bei einem Laserdurchschuss so verkohlt werden, dass sie dann eine elektrisch leitfähige Verbindung zwischen den Leiterbahnen bildet.

Aufgabe der Erfindung ist es, eine alternative Anordnung der eingangs genannten Art dahingehend zu entwerfen, dass sie einerseits sehr kostengünstig herstellbar und andererseits aber auch sehr betriebssicher ist.

Hierfür wird gemäß der Erfindung eine Anordnung gemäß des Patentanspruchs 1 vorgeschlagen.

Ein Grundgedanke der Erfindung ist es dabei, dass es beim Ein- oder Durchschuss in oder durch das Flächengebilde zu einem elektrischen Verbinden bzw. Kurzschluss zwischen den beiden elektrisch leitfähigen Schichten oder allgemein zu einer Veränderung der elektrischen Eigenschaften der mittels der Messkanäle überwachten elektrisch leitfähigen Schichten kommt. In der elektrisch trennenden Schicht entsteht beim Ein- bzw. Durchschuss in der Regel ein Loch, wodurch sich in zumindest einem, in der Regel sogar in beiden Messkanälen der jeweilige elektrische Parameter ändert, was von der Auswertevorrichtung entsprechend festgestellt und überwacht oder in anderen Worten gemessen wird. Ein erster Vorteil dieses Aufbaus besteht darin, dass zur Ausbildung der elektrisch trennenden, wie auch der elektrisch leitfähigen Schichten sehr kostengünstige Materialien verwendet werden können und auch der elektrische Aufbau insgesamt sehr einfach gestaltet sein kann. Insbesondere die elektrisch trennenden Schichten können dünn und aus günstigem Material ausgeführt sein, da sie beim Ein- oder Durchschuss in diesem Bereich günstigerweise vollkommen verschwinden, sodass dort die Materialien der leitfähigen Schichten bevorzugt direkt miteinander in Kontakt treten bzw. direkt miteinander verbunden werden. Ein weiterer Vorteil der erfindungsgemäßen Ausgestaltungsform der Detektorvorrichtung besteht darin, dass über die beiden Messkanäle permanent überwacht werden kann, dass keine Störung im Gesamtsystem vorliegt. Sobald eine Störung z.B. durch einen Wackelkontakt oder ein Abreißen der entsprechenden Anschlüsse in einem der Messkanäle auftritt, kommt es ebenfalls zu einer Veränderung zumindest eines der in den Messkanälen überwachten bzw. gemessenen elektrischen Parameter, was mit der Auswertevorrichtung wiederum sofort festgestellt werden kann.

Günstigerweise findet die Überwachung der zumindest zwei Messkanäle permanent statt. Sobald sich eine Änderung zumindest eines der überwachten, also des ersten und/oder zweiten elektrischen Parameters in zumindest einem der Messkanäle ergibt, kann die Auswertevorrichtung ein Warn- und oder Abschaltsignal abgeben. Hierfür sehen bevorzugte Ausgestaltungsformen der Erfindung vor, dass die Auswertevorrichtung zumindest einen Signalausgang zur Abgabe eines Warn- und/oder Abschaltsignals aufweist.

Erfindungsgemäße Anordnungen können, wie der eingangs genannte Stand der Technik z.B. dazu verwendet werden, zu überwachen, dass ein von einer Schussquelle in Form eines Schweißroboters oder eines anderen Lasergerät erzeugter Laserstrahl seinen vorgegebenen Bereich nicht verlässt. Tut er dies, so kommt es zu einem Ein- oder Durchschuss in dem Flächengebilde der Detektorvorrichtung, womit die Auswertevorrichtung dann eine Änderung des ersten elektrischen Parameters in einem der Messkanäle und/oder eine Änderung des zweiten elektrischen Parameters in einem anderen der Messkanäle detektiert und entsprechende Warn- und/oder Abschaltsignale abgeben kann. Z.B. können diese Abschaltsignale dazu verwendet werden, die Schussquelle, also z.B. den Schweißroboter oder das Lasergerät abzuschalten. Auch das Auslösen von diversen optischen und/oder akustischen oder sonstigen Warnmeldungen ist möglich.

Erfindungsgemäße Detektorvorrichtungen können aber nicht nur zur Überwachung von Schussquellen in Form von Lasern eingesetzt werden. Es ist vielmehr möglich, diese auch dort einzusetzen, wo umherfliegende Metall- oder andere Partikel von anderen Schussquellen zu befürchten sind. So kann ein entsprechender, von der Detektorvorrichtung erfindungsgemäß detektierbarer Ein- und/oder Durchschuss in dem Flächengebilde der Detektorvorrichtung auch durch ein Geschoss einer Schussquelle in Form einer Feuerwaffe oder einem, von einer anderen Schussquelle abgegebenen und umherfliegenden Splitter oder dergleichen erzeugt werden. Erfindungsgemäße Detektorvorrichtungen können mit ihren Flächengebilden also auch Bereiche begrenzen, bei denen sichergestellt bzw. überwacht werden soll, dass Projektile, Splitter und dergleichen diese Bereiche nicht verlassen.

Die Flächengebilde der Detektorvorrichtung können als Wandelemente ausgebildet sein. Diese sind dann vorzugsweise selbsttragend bzw. in sich steif. Es ist aber genauso gut möglich, erfindungsgemäße Flächengebilde als flexible Vorhänge auszubilden, die dann gegebenenfalls sogar aufgerollt oder dergleichen werden können. Die Flächengebilde erfindungsgemäßer Anordnungen können als Einzelwände bzw. -vorhänge oder als Wand- oder Vorhanganordnungen ausgebildet sein. Sie können aber auch als Gehäuse, Kabinen und dergleichen, wie z.B. Laserkabinen ausgebildet sein.

Die elektrisch leitfähigen Schichten weisen bevorzugt einen spezifischen ohmschen Widerstand kleiner oder gleich 5 Ωmm²/m (Ohm mal Quadratmillimeter durch Meter), vorzugsweise kleiner oder gleich 1 Ωmm²/m auf. Günstigerweise liegt der spezifische ohmsche Widerstand der elektrisch leitfähigen Schichten in einem Bereich von 0,001 Ωmm²/m bis 1 Ωmm²/m. Als Material zur Ausbildung dieser elektrisch leitfähigen Schichten können z.B. Aluminium, Stahl, Kupfer oder Messing in Reinform oder als Legierungen eingesetzt werden. Die elektrisch leitfähigen Schichten können als Platten aber auch als flexible Matten, Folien, Gewebe oder dergleichen ausgebildet sein. Die Dicke der elektrisch leitfähigen Schichten liegt günstigerweise zwischen 0,1mm (Millimeter) und 10mm, vorzugsweise zwischen 1mm und 3mm. Die elektrisch trennenden Schichten weisen einen höheren spezifischen ohmschen Widerstand, als die elektrisch leitfähigen Schichten auf. Der spezifische ohmsche Widerstand der elektrisch trennenden Schichten liegt günstigerweise in einem Bereich größer oder gleich 10 Ωmm²/m. Die elektrisch trennenden Schichten sind also vorzugsweise elektrisch isolierende Schichten. Sie haben günstigerweise eine Dicke zwischen 0,01mm und 2mm. Sie können als Beschichtung, Lackierung, Folie, Eloxierung, Maschenware, Matte oder auch als Platte ausgeführt sein.

Bei den elektrisch leitfähigen und/oder auch bei den elektrisch trennenden Schichten handelt es sich vorzugsweise jeweils um in sich geschlossene Flächen, welche in anderen Worten vollflächig ausgebildet sind. Dies bedeutet, dass die Flächen bzw. Schichten keine Öffnungen, Löcher oder Durchlässe aufweisen, es sich also z.B. nicht um Gitter, Maschenware oder dergleichen handelt.

Die Erfindung sieht vor, dass die Detektorvorrichtung zusätzlich einen dritten Messkanal aufweist, welcher einen dritten elektrischen Parameter zwischen dem einen der Messkanäle und dem anderen der Messkanäle, vorzugsweise permanent, überwacht. Der Messkanal der den ersten elektrischen Parameter überwacht, kann auch als erster Messkanal bezeichnet werden. Entsprechend kann der Messkanal der den zweiten elektrischen Parameter überwacht, auch als zweiter Messkanal bezeichnet werden. Der Messkanal der den dritten elektrischen Parameter überwacht, kann entsprechend als dritter Messkanal bezeichnet werden.

Der in dem jeweiligen Messkanal überwachte erste bzw. zweite bzw. dritte elektrische Parameter kann z.B. ein elektrischer Strom und/oder eine elektrische Spannung und/oder ein ohmscher Widerstand sein. Es kann auch eine Kurzschlussüberwachung zwischen den Messkanälen stattfinden. Auch ein Kurzschluss zwischen zwei Messkanälen erzeugt in zumindest einem der Messkanäle, in der Regel sogar in beiden Messkanälen, eine Änderung des jeweils überwachten elektrischen Parameters. Günstigerweise handelt es sich bei dem ersten und/oder zweiten und/oder dritten elektrischen Parameter um einen Gleichstrom- bzw. Gleichspannungsparameter bzw. um einen ohmschen Widerstand, also Gleichstromwiderstand. Die in den Messkanälen angelegten und zu überwachenden elektrischen Parameter liegen günstigerweise im Niederspannungsbereich bzw. werden in diesem gemessen, z.B. im Bereich zwischen 10 und 30 Volt.

In der oben genannten Variante mit drei Messkanälen kann z.B. vorgesehen sein, dass der erste und der zweite elektrische Parameter, also die elektrischen Parameter, welche mit dem ersten und zweiten Messkanal überwacht werden, jeweils ein ohmscher Widerstand ist. Besonders bevorzugte Varianten sehen beim dritten Messkanal vor, dass dort der überwachte dritte elektrische Parameter ein ohmscher Widerstand oder der Kurzschluss zwischen dem ersten und dem zweiten Messkanal ist.

Günstigerweise sind jeweils zueinander benachbarte und durch eine elektrisch trennende Schicht voneinander getrennte elektrisch leitfähige Schichten voneinander verschiedenen Messkanälen zugeordnet. In anderen Worten werden bevorzugt zwei benachbart zueinander angeordnete und mittels der elektrisch trennenden Schicht voneinander getrennte, elektrisch leitfähige Schichten von verschiedenen Messkanälen überwacht.

Grundsätzlich ist es möglich, erfindungsgemäße Detektorvorrichtungen mit dreischichtig aufgebauten Flächengebilden auszugestalten. Besonders sichere Varianten der erfindungsgemäßen Detektorvorrichtung sehen jedoch einen fünfschichtigen Aufbau vor, z.B. indem das Flächengebilde zumindest drei elektrisch leitfähige Schichten aufweist, wobei zwischen jeweils zwei der elektrisch leitfähigen Schichten jeweils zumindest eine elektrisch trennende Schicht angeordnet ist. Insbesondere ist dabei günstigerweise vorgesehen, dass das Flächengebilde zumindest drei elektrisch leitfähige Schichten aufweist, wobei zwischen jeweils zwei der elektrisch leitfähigen Schichten jeweils zumindest eine elektrisch trennende Schicht angeordnet ist und eine der elektrisch leitfähigen Schichten auf einer der Schussquelle zugewandten Seite der elektrisch trennenden Schichten angeordnet ist und eine andere der elektrisch leitfähigen Schichten auf einer von der Schussquelle abgewandten Seite der elektrisch trennenden Schichten angeordnet ist. Besonders bevorzugt ist in diesem Zusammenhang vorgesehen, dass die beiden äußeren der elektrisch leitfähigen Schichten miteinander elektrisch in Reihe geschaltet sind und zum selben Messkanal gehören, weicher den ersten elektrischen Parameter überwacht und/oder dass der andere der Messkanäle an die mittige der elektrisch leitfähigen Schichten angeschlossen ist und dort den zweiten elektrischen Parameter überwacht. Diese Varianten der Erfindung haben den Vorteil, dass, wenn es durch entsprechenden Wärmeeintrag beim Ein- oder Durchschuss zu einem Aufwölben der mittleren elektrisch leitfähigen Schicht weg von einer der äußeren elektrisch leitfähigen Schichten kommt, dies meist automatisch zu einem Kurzschluss zwischen der anderen äußeren elektrisch leitfähigen Schicht und der mittleren elektrisch leitfähigen Schicht führt, sodass zumindest einer der von der Auswertevorrichtung überwachten Messkanäle eine Änderung des jeweiligen elektrischen Parameters wiedergibt.

Der Vollständigkeit halber wird darauf hingewiesen, dass in den Messkanälen nicht unbedingt jeweils dieselbe Art eines elektrischen Parameters überwacht werden muss. Es kann auch vorgesehen sein, dass in verschiedenen Messkanälen verschiedene elektrische Parameter und/oder in einem Messkanal mehrere verschiedene elektrische Parameter überwacht werden. Z.B. kann der erste elektrische Parameter eine Spannung und der zweite elektrische Parameter ein Widerstand oder ein Strom sein.

Bevorzugte Varianten der Erfindung sehen vor, dass die elektrisch leitfähigen Schichten jeweils unmittelbar an der oder den daneben angeordneten, elektrisch trennenden Schicht oder Schichten anliegen. Günstig ist es, wenn die elektrisch leitfähigen Schichten jeweils vollflächig mit einer ihrer Oberflächen an der oder den daneben angeordneten elektrisch trennenden Schicht oder Schichten anliegen, wobei die Oberflächen der elektrisch leitfähigen Schichten durch deren Länge und Breite vorgegeben sind und die Dicke der jeweiligen elektrisch leitfähigen Schichten kleiner als deren Länge und als deren Breite ist. Besonders bevorzugt ist auch vorgesehen, dass die elektrisch leitfähigen Schichten und die elektrisch trennende Schicht oder die elektrisch trennenden Schichten miteinander verbunden sind und einen in sich, vorzugsweise vollflächig, zusammenhängenden mehrschichtigen Körper bilden. Günstigerweise sind die jeweils benachbarten Schichten miteinander verklebt. Es kann sich dabei um eine vollflächige Verklebung aber auch um eine nur bereichsweise Verklebung handeln. Eine bereichsweise Verklebung wäre z.B. eine punktuelle Verklebung, eine streifenweise Verklebung, eine gitterartige Verklebung oder dergleichen.

Neben der Anordnung an sich betrifft die Erfindung auch ein Verfahren zum Betrieb einer erfindungsgemäßen Detektorvorrichtung, bei dem vorgesehen ist, dass mit der Auswertevorrichtung mit einem der Messkanäle der erste elektrische Parameter in einer der leitfähigen Schichten und mit einem anderen der Messkanäle der zweite elektrische Parameter in einer anderen der leitfähigen Schichten, vorzugsweise permanent, überwacht bzw. in anderen Worten gemessen wird. In einer Weiterbildung des Verfahrens ist dann günstigerweise vorgesehen, dass die Auswertevorrichtung einen Signalausgang aufweist und von der Auswertevorrichtung über den Signalausgang ein Warn- und/oder Abschaltsignal abgegeben wird, wenn von der Auswertevorrichtung, bedingt durch einen Einschuss oder Durchschuss in oder durch das Flächengebilde oder durch eine Störung, in zumindest einem der Messkanäle eine Abweichung des gemessenen ersten und/oder zweiten elektrischen Parameters von einem vorgebbaren Sollwert um mehr als einen vorgebbaren Toleranzwert und/oder ein Kurzschluss zwischen den Messkanälen festgestellt wird. Bei einem Ein- bzw. Durchschuss durch das Flächengebilde bildet sich in der Regel ein Ein- oder Durchschusskanal durch die elektrisch trennende Schicht bzw. die elektrisch trennenden Schichten und auch durch die elektrisch leitfähigen Schichten aus. Das aufgeschmolzene Material der elektrisch leitfähigen Schichten verbindet sich durch die entsprechenden Durchbrüche in den elektrisch trennenden Schichten hindurch, sodass es in der Regel zu einer direkten elektrischen Verbindung zwischen den vorher elektrisch voneinander getrennten elektrisch leitfähigen Schichten, also zu einer Art Kurzschluss kommt. Das Material der elektrisch trennenden Schicht verschwindet im Bereich des Ein- bzw. Durchschusses vorzugsweise vollständig. Jedenfalls ergibt sich eine Abweichung des gemessenen elektrischen Parameters in zumindest einem, meistens in allen Messkanälen. Dies wird von der Auswertevorrichtung entsprechend erkannt, sodass in bevorzugten Ausgestaltungsformen ein entsprechendes Warn- und/oder Abschaltsignal abgegeben werden kann.

Soweit anwendbar, gelten die bevorzugten Merkmale der Anordnung an sich auch für bevorzugte Ausführungsvarianten des erfindungsgemäßen Verfahrens zum Betrieb der Detektorvorrichtung.

Weitere Merkmale und Einzelheiten bevorzugter Ausführungsbeispiele der Erfindung werden nachfolgend anhand der Figurenbeschreibung erläutert. Es zeigen:
Fig. 1 eine schematisierte Gesamtdarstellung eines einfachen Ausführungsbeispiels der Anordnung;
Fig. 2 und 3 schematisierte Darstellungen zu zwei elektrisch leitfähigen Schichten und einer dazwischen angeordneten elektrisch trennenden Schicht;
Fig. 4 und 5 Ausführungsbeispiele mit einem fünfschichtigen Aufbau;
Fig. 6 schematisiert einen Durchschuss durch einen dreischichtigen Aufbau und
Fig. 7 schematisiert einen Durchschuss durch einen fünfschichtigen Aufbau.

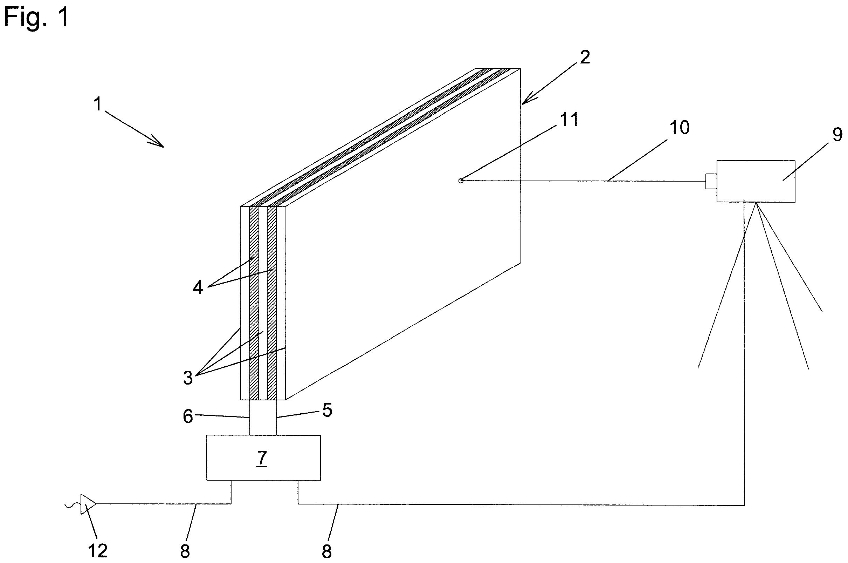

Fig. 1 zeigt schematisiert und beispielhaft einen Gesamtaufbau der Anordnung also der Detektorvorrichtung 1 samt einer Schussquelle 9 in Form eines Lasergerätes, welches hier ebenfalls nur stark vereinfacht dargestellt ist. Es kann sich beim Lasergerät also bei der hier gezeigten Schussquelle 9 z.B. um einen Laserschweißroboter oder dergleichen handeln. Das Lasergerät ist im Normalbetrieb so eingestellt, dass sein Laserstrahl 10 nicht auf das hier als Wand ausgebildete Flächengebilde 2 trifft. Durch eine Fehlsteuerung oder dergleichen kann es allerdings dazu kommen, dass der Laserstrahl 10 in Bereiche gelenkt wird, in die er nicht gelenkt werden soll. Um dies rasch zu erkennen, ist die Detektorvorrichtung 1 vorgesehen. In dem hier dargestellten Fall einer Fehllenkung des Laserstrahls 10 trifft dieser auf das hier wandförmige Flächengebilde 2 und es kommt aufgrund der gebündelten Energie des Laserstrahls 10 zu einem Durchschuss 11 durch das Flächengebilde 2. Hierdurch kommt es auf zumindest einem der hier nur stark schematisiert dargestellten Messkanäle 5 und/oder 6 zu einer Änderung des überwachten ersten und/oder zweiten elektrischen Parameters, was von der Auswertevorrichtung 7 erkannt wird. Die Auswertevorrichtung 7 kann dann über einen der beiden Signalausgänge 8 ein entsprechendes Warnsignal an eine optische, akustische oder wie auch immer geartete Warneinrichtung 12 abgeben. Anstelle dessen oder auch zusätzlich ist es möglich, dass die Auswertevorrichtung 7 über einen Signalausgang 8 ein Abschaltsignal an das Lasergerät bzw. die Schussquelle 9 absendet, sodass dieses Lasergerät 9 sofort abgeschaltet wird und eine weitere Gefährdung von Mensch und Maschine hierdurch unterbunden ist.

Als Auswertevorrichtung 7 kann bei einer solchen erfindungsgemäßen Detektorvorrichtung 1 z.B. ein an sich bekanntes Sicherheitsrelais für einen Nothalt verwendet werden.

Zusätzlich zum Ein- oder Durchschuss 11 überwacht die Auswertevorrichtung 7 aber, vorzugsweise permanent, auch, ob die gesamte Messmimik mit den Messkanälen 5 und 6 vorschriftsmäßig funktioniert. Kommt es unabhängig von einem Durchschuss 11 oder einem Einschuss in das Flächengebilde 2 durch eine Störung, wie z.B. einen Wackelkontakt oder ein abreißendes Kabel oder dergleichen zu einer Änderung des überwachten ersten bzw. zweiten elektrischen Parameters in zumindest einem der Messkanäle 5 und 6, so wird dies von der Auswertevorrichtung 7 ebenfalls festgestellt, sodass dann ein entsprechendes Warn- und/oder Abschaltsignal abgegeben oder eine sonstige Aktion gesetzt werden kann.

Im in Fig. 1 gezeigten Ausführungsbeispiel handelt es sich bei dem Flächengebilde 2 um einen fünfschichtigen Aufbau, bestehend aus drei elektrisch leitfähigen Schichten 3 und zwei elektrisch trennenden Schichten 4, wobei jeweils zwei elektrisch leitfähige Schichten 3 durch eine dazwischen angeordnete elektrisch trennende Schicht 4 im Normalbetrieb elektrisch voneinander getrennt sind. Zu den verschiedenen Materialien, aus denen die Schichten 3 und 4 ausgebildet werden können und auch deren bevorzugte Eigenschaften wird auf die Ausführungen weiter oben verwiesen. Dort ist auch dargelegt, dass ein entsprechendes Flächengebilde 2 nicht nur als Wand sondern auch als Vorhang ausgeführt sein kann, z.B. um als eine Art Rolltor eine Öffnung möglichst einfach wieder verschließbar auszugestalten. Benötigt man eine wieder verschließbare Öffnung, so kann dies auch mittels zumindest eines wandartig ausgebildeten erfindungsgemäßen Flächengebildes 2, welches als ein Schiebetor ausgestaltet ist, realisiert werden. Es kann aus einer Vielzahl von solchen Flächengebilden 2 eine Laserkabine gebildet werden, mit der die Schussquelle 9 in allen benötigen Bereichen bzw. Richtungen vorzugsweise vollumfänglich ummantelt wird.

Wie eingangs bereits dargelegt, kann die erfindungsgemäße Detektorvorrichtung 1 aber auch dazu verwendet werden, Durchschüsse 11 bzw. Einschüsse mittels physischer Körper wie Projektile, Splitter und dergleichen zu detektieren. Die erfindungsgemäßen Anordnungen können also auch ganz andere Schussquellen 9 als Lasergeräte umfassen bzw. überwachen.

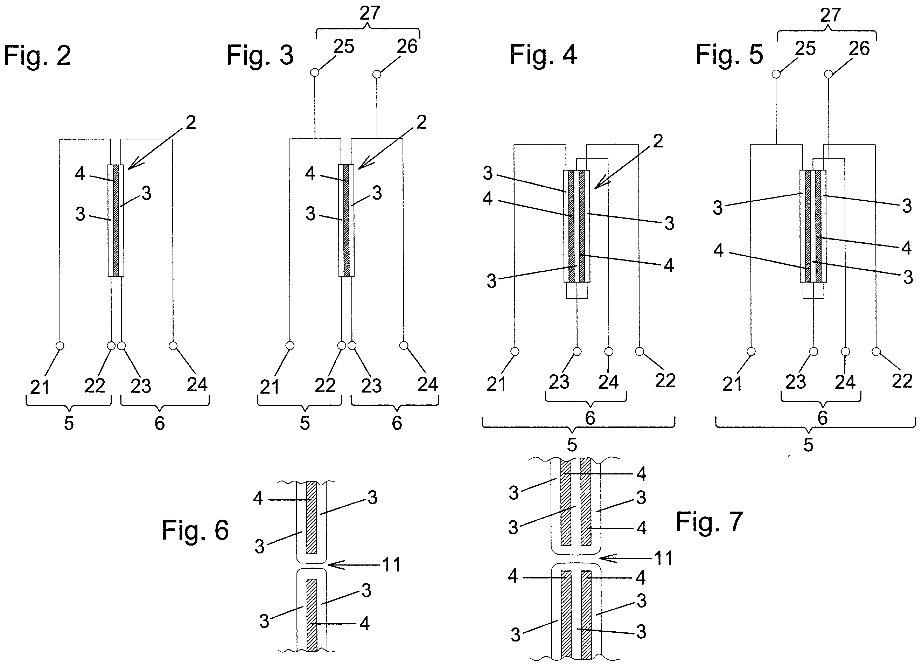

Anstelle des fünfschichtigen Aufbaus könnte in Fig.1 natürlich auch ein dreischichtiger Aufbau des Flächengebildes 2 realisiert werden, wie dies in den Fig. 2 und 3 beispielhaft gezeigt ist. Es ist bei der Erfindung aber jeweils vorgesehen, dass eine der elektrisch leitfähigen Schichten 3 auf einer der Schussquelle 9 zugewandten Seite der elektrisch trennenden Schicht 4 bzw. Schichten 4 angeordnet ist und eine andere der elektrisch leitfähigen Schichten 3 auf einer von der Schussquelle 9 abgewandten Seite der elektrisch trennenden Schicht 4 bzw. Schichten 4 angeordnet ist.

Während in Fig. 1 die Messkanäle 5 und 6 und deren Anschlüsse an die elektrisch leitfähigen Schichten 3 nur stark schematisiert dargestellt sind, werden in den Fig. 2 bis 5 nun verschiedene Ausführungsvarianten gezeigt, wie bei drei- und fünfschichtig aufgebauten Flächengebilden 2 die Messkanäle 5 und 6 konkret an die elektrisch leitfähigen Schichten 3 angeschlossen sein können.

In Fig. 2 ist das Flächengebilde 2 aus zwei außenliegenden elektrisch leitfähigen Schichten 3 und einer dazwischenliegenden elektrisch trennenden Schicht 4 gebildet. Die elektrisch leitfähigen Schichten 3 liegen jeweils, wie auch in den anderen nachfolgend gezeigten Ausführungsbeispielen unmittelbar an der elektrisch trennenden Schicht 4 an. Günstigerweise handelt es sich um einen jeweils vollflächigen Verbund, sodass das Flächengebilde 2 insgesamt einen mehrschichtigen Körper bildet. In Fig. 2 sind zwei Messkanäle 5 und 6 vorgesehen. Jeder der Messkanäle 5 und 6 überwacht einen entsprechenden elektrischen Parameter in einer der leitfähigen Schichten 3. Dies erfolgt beim Messkanal 5 über den Abgriff der Messkontakte 21 und 22 und beim Messkanal 6 über den Abgriff der Messkontakte 23 und 24. Die Messkontakte 21 bis 24 können entsprechend direkt oder indirekt an die in den Fig. 2 bis 5 nicht noch einmal dargestellte Auswertevorrichtung 7 angeschlossen sein. Wie auch bei den nachfolgend noch geschilderten Ausführungsbeispielen erfolgt die Überwachung des ersten elektrischen Parameters in Messkanal 5 und des zweiten elektrischen Parameters in Messkanal 6 bevorzugt während des Betriebs der zu überwachenden Schussquelle 9, also hier des Lasergeräts, permanent. Bei den überwachten ersten und zweiten elektrischen Parametern in den einzelnen Messkanälen 5 und 6 kann es sich, wie eingangs erläutert, z.B. um einen elektrischen Strom und/oder eine elektrische Spannung und/oder einen ohmschen Widerstand handeln. Es kann aber auch eine Detektion eines elektrischen Kurzschlusses zwischen den Messkanälen 5 und 6 erfolgen. Durch die, vorzugsweise permanente, Überwachung der Messkanäle 5 und 6 können auch nicht durch einen Einschuss oder Durchschuss 11 hervorgerufene Störungen wie z.B. einen Wackelkontakt oder einen Kabelbruch oder dergleichen von der Detektorvorrichtung 1 festgestellt werden, indem zumindest einer der elektrischen Parameter in den zu überwachenden Messkanälen 5 und 6 eine Abweichung von einem vorgebbaren Sollwert um mehr als einen vorgebbaren Toleranzwert anzeigt oder ein Kurzschluss zwischen den Messkanälen 5 und 6 durch eine Abweichung im ersten und/oder zweiten elektrischen Parameter festgestellt wird. Ebenso wird festgestellt, wenn es zu einem Einschuss oder Durchschuss 11 durch das Flächengebilde 2 kommt.

Zu den nachfolgend noch geschilderten Ausführungsvarianten gemäß der Fig. 3 bis 5 wird nur noch auf die Unterschiede zum Ausführungsbeispiel gemäß Fig. 2 eingegangen. Alle anderen Schilderungen gelten entsprechend auch für diese anderen Ausführungsbeispiele gemäß der Fig. 3 bis 5.

In Fig. 3 ist ausgehend von Fig. 2 zusätzlich noch ein dritter Messkanal 27 vorgesehen, welcher über seine Messkontakte 25 und 26 zusätzlich an die Auswertevorrichtung 7 angeschlossen werden kann, um zusätzlich in diesem dritten Messkanal 27 einen dritten elektrischen Parameter zu überwachen.

In Fig. 4 handelt es sich nun um einen fünfschichtigen Aufbau. Hier gibt es eine zentrale elektrisch leitfähige Schicht 3 und zusätzlich noch zwei außenliegende elektrisch leitfähige Schichten 3. Zwischen jeweils zwei elektrisch leitfähigen Schichten 3 ist wiederum jeweils eine elektrisch trennende Schicht 4 angeordnet. Die beiden äußeren elektrisch leitfähigen Schichten 3 sind miteinander elektrisch in Reihe geschaltet und gehören zum selben Messkanal 5, dessen erster elektrischer Parameter von der Auswertevorrichtung 7 über die Messkontakte 21 und 22 abgegriffen wird. Der zweite Messkanal 6 ist in diesem Ausführungsbeispiel an die mittig angeordnete elektrisch leitfähige Schicht 3 angeschlossen, sein zweiter elektrischer Parameter wird über die elektrischen Kontakte 23 und 24 von der Auswertevorrichtung 7 überwacht. Auch bei dieser Ausführungsvariante gemäß Fig. 4 wird in beiden Messkanälen 5 und 6 von der Auswertevorrichtung 7 jeweils zumindest ein elektrischer Parameter überwacht. Kommt es in diesem oder in beiden elektrischen Parametern bzw. Messkanälen zu einer Abweichung vom vorgebbaren Sollwert um mehr als einen vorgebbaren Toleranzwert oder wird ein Kurzschluss zwischen den Messkanälen 5 und 6 festgestellt, so kann die Auswertevorrichtung 7 über einen entsprechenden Signalausgang 8 ein Warn- und/oder Abschaltsignal abgeben.

In Fig. 5 ist eine Ausführungsvariante gezeigt, welche auf der Variante gemäß Fig. 4 basiert. Zusätzlich ist hier allerdings ein dritter Messkanal 27 geschaffen, welcher einen elektrischen Parameter zwischen den Messkanälen 5 und 6 überwacht. Die Anschlüsse 25 und 26 des entsprechenden Messkanals 27 können wiederum an die Auswertevorrichtung 7 angeschlossen sein. Besonders bevorzugt ist bei solchen Varianten mit drei Messkanälen vorgesehen, dass die Messkanäle 5 und 6 dazu verwendet werden, zu überwachen, dass keine Störung im Gesamtsystem vorliegt, also beide Messkanäle 5 und 6 einwandfrei funktionieren. Hierzu kann z.B. eine Widerstandsmessung zur Überwachung dieser Messkanäle 5 und 6 durchgeführt werden. Der dritte Messkanal 27 ist in bevorzugten Varianten zur Erkennung eines Ein- oder Durchschusses vorgesehen. Der in ihm überwachte dritte elektrische Parameter kann ebenfalls ein ohmscher Widerstand sein oder es kann sich genauso gut um eine Kurzschlussüberwachung handeln.

Fünfschichtige Aufbauten eines entsprechenden Flächengebildes 2, wie sie in Fig. 4 und 5 gezeigt sind, haben gegenüber den dreischichtigen Varianten wie z.B. gemäß Fig. 2 und 3 den zusätzlichen Sicherheitsvorteil, dass, wenn es bei einem Ein- oder Durchschuss 11 z.B. wegen entsprechender Hitzeeinwirkung zu einem Aufwölben der mittleren leitfähigen Schicht 3 kommt, diese zwar von einer der außenliegenden elektrisch leitfähigen Schichten 3 abgehoben, aber gleichzeitig zur anderen der elektrisch leitfähigen Schichten 3 hingebogen wird, sodass es auf jeden Fall zu einer entsprechenden von der Auswertevorrichtung 7 detektierbaren Abweichung in einem der überwachten Messkanäle 5, 6 und gegebenenfalls auch 27 kommt.

Fig. 6 veranschaulicht nun noch schematisiert die Situation eines Durchschusses 11 durch einen dreischichtigen Aufbau, wie er in den Fig. 2 und 3 gezeigt ist. Durch den Laser oder ein sonstiges Projektil oder Splitter, wird ein entsprechender Durchgangskanal in der elektrisch trennenden Schicht 4 geschaffen, durch den hindurch Material der außenliegenden elektrischen Schichten transportiert bzw. hindurchgeschmolzen wird, sodass es in der Regel zum direkten elektrisch leitfähigen Verbinden der beiden außenliegenden elektrisch leitfähigen Schichten 3 und damit zum Kurzschluss kommt. Hierdurch werden der in den einzelnen Messkanälen 5 und 6 überwachte erste und/oder zweite elektrische Parameter signifikant verändert, was erfindungsgemäß von der Auswertevorrichtung 7 festgestellt werden kann.

In Fig. 7 ist dieselbe Situation für einen fünfschichtigen Aufbau wie er in den Fig. 4 und 5 gezeigt ist, dargestellt. Auch hier kommt es durch Wegschmelzen der elektrisch trennenden Schichten 4 und Aufschmelzen der elektrisch leitfähigen Schichten 3 zu einer Kontaktierung zwischen den elektrisch leitfähigen Schichten 3 der verschiedenen Messkanäle 5 und 6 und damit zu einer entsprechenden Abweichung der überwachten bzw. gemessenen elektrischen Parameter in zumindest einem der Messkanäle 5, 6 und 27, was wiederum von der Auswertevorrichtung 7 entsprechend detektiert werden kann.

### Legende

### zu den Hinweisziffern:

- 1: Detektorvorrichtung
- 2: Flächengebilde
- 3: elektrisch leitfähige Schicht
- 4: elektrisch trennende Schicht
- 5: Messkanal
- 6: Messkanal
- 7: Auswertevorrichtung
- 8: Signalausgang
- 9: Schussquelle
- 10: Laserstrahl
- 11: Durchschuss
- 12: Warneinrichtung

- 21: Messkontakt
- 22: Messkontakt
- 23: Messkontakt
- 24: Messkontakt
- 25: Messkontakt
- 26: Messkontakt
- 27: Messkanal

## Patentansprüche

1. Anordnung mit zumindest einer Schussquelle (9) und zumindest einer Detektorvorrichtung (1), wobei die Detektorvorrichtung (1) zumindest ein Flächengebilde (2) zur Erkennung zumindest eines von der Schussquelle (9) verursachten Ein- oder Durchschusses (11) in oder durch das Flächengebilde (2) und zumindest eine Auswertevorrichtung (7) aufweist, wobei das Flächengebilde (2) zumindest zwei elektrisch leitfähige Schichten (3) und zumindest eine elektrisch trennende, insbesondere isolierende, Schicht (4) aufweist, wobei eine der elektrisch leitfähigen Schichten (3) auf einer der Schussquelle (9) zugewandten Seite der elektrisch trennenden Schicht (4) angeordnet ist und eine andere der elektrisch leitfähigen Schichten (3) auf einer von der Schussquelle (9) abgewandten Seite der elektrisch trennenden Schicht (4) angeordnet ist und wobei die elektrisch trennende Schicht (4) einen höheren spezifischen ohmschen Widerstand als die elektrisch leitfähigen Schichten (3) aufweist, **dadurch gekennzeichnet, dass** die Detektorvorrichtung (1) zumindest zwei Messkanäle (5, 6) aufweist, wobei die Auswertevorrichtung (7) mit einem der Messkanäle (5) zumindest einen ersten elektrischen Parameter in einer der elektrisch leitfähigen Schichten (3) und mit einem anderen der Messkanäle (6) zumindest einen zweiten elektrischen Parameter in einer anderen der elektrisch leitfähigen Schichten (3), vorzugsweise permanent, überwacht und die Detektorvorrichtung (1) zusätzlich einen dritten Messkanal (27) aufweist, welcher einen dritten elektrischen Parameter zwischen dem einen der Messkanäle (5) und dem anderen der Messkanäle (6), vorzugsweise permanent, überwacht.

2. Anordnung nach Anspruch 1, **dadurch gekennzeichnet, dass** die Auswertevorrichtung (7) zumindest einen Signalausgang (8) zur Abgabe eines Warn- und/oder Abschaltsignals aufweist.

3. Anordnung nach Anspruch 1 oder 2, **dadurch gekennzeichnet, dass** der erste und/oder der zweite und/oder der dritte elektrische Parameter ein elektrischer Strom und/oder eine elektrische Spannung und/oder ein ohmscher Widerstand und/oder ein elektrischer Kurzschluss zwischen den Messkanälen (5, 6, 27) ist.

4. Anordnung nach einem der Ansprüche 1 bis 3, **dadurch gekennzeichnet, dass** jeweils zueinander benachbarte und durch eine elektrisch trennende Schicht (4) voneinander getrennte elektrisch leitfähige Schichten (3) voneinander verschiedenen Messkanälen (5, 6) zugeordnet sind.

5. Anordnung nach einem der Ansprüche 1 bis 4, **dadurch gekennzeichnet, dass** das Flächengebilde (2) ein Wandelement oder ein flexibler Vorhang ist.

6. Anordnung nach einem der Ansprüche 1 bis 5, **dadurch gekennzeichnet, dass** das Flächengebilde (2) zumindest drei elektrisch leitfähige Schichten (3) aufweist, wobei zwischen jeweils zwei der elektrisch leitfähigen Schichten (3) jeweils zumindest eine elektrisch trennende Schicht (4) angeordnet ist und eine der elektrisch leitfähigen Schichten (3) auf einer der Schussquelle (9) zugewandten Seite der elektrisch trennenden Schichten (4) angeordnet ist und eine andere der elektrisch leitfähigen Schichten (3) auf einer von der Schussquelle (9) abgewandten Seite der elektrisch trennenden Schichten (4) angeordnet ist.

7. Anordnung nach Anspruch 6, **dadurch gekennzeichnet, dass** die beiden äußeren der elektrisch leitfähigen Schichten (3) miteinander elektrisch in Reihe geschaltet sind und zum selben Messkanal (5) gehören, welcher den ersten elektrischen Parameter überwacht und/oder dass der andere der Messkanäle (6) an die mittige der elektrisch leitfähigen Schichten (3) angeschlossen ist und dort den zweiten elektrischen Parameter überwacht.

8. Anordnung nach einem der Ansprüche 1 bis 7, **dadurch gekennzeichnet, dass** die elektrisch leitfähigen Schichten (3) jeweils unmittelbar an der oder den daneben angeordneten elektrisch trennenden Schicht (4) oder Schichten (4) anliegen und/oder vollflächig mit einer ihrer Oberflächen an der oder den daneben angeordneten elektrisch trennenden Schicht (4) oder Schichten (4) anliegen, wobei die Oberflächen der elektrisch leitfähigen Schichten (3) durch deren Länge und Breite vorgegeben sind und die Dicke der jeweiligen elektrisch leitfähigen Schichten (3) kleiner als deren Länge und als deren Breite ist.

9. Anordnung nach einem der Ansprüche 1 bis 8, **dadurch gekennzeichnet, dass** die elektrisch leitfähigen Schichten (3) und die elektrisch trennende Schicht (4) oder die elektrisch trennenden Schichten (4) miteinander verbunden, vorzugsweise miteinander verklebt, sind und einen in sich, vorzugsweise vollflächig, zusammenhängenden mehrschichtigen Körper bilden.

10. Verfahren zum Betrieb einer Anordnung nach einem der Ansprüche 1 bis 9, **dadurch gekennzeichnet, dass** mit der Auswertevorrichtung (7) mit einem der Messkanäle (5) der erste elektrische Parameter in einer der leitfähigen Schichten (3) und mit einem anderen der Messkanäle (6) der zweite elektrische Parameter in einer anderen der leitfähigen Schichten (3), vorzugsweise permanent, überwacht wird.

11. Verfahren nach Anspruch 10, **dadurch gekennzeichnet, dass** die Auswertevorrichtung (7) einen Signalausgang (8) aufweist und von der Auswertevorrichtung (7) über den Signalausgang (8) ein Warn- und/oder Abschaltsignal abgegeben wird, wenn von der Auswertevorrichtung (7), bedingt durch einen Einschuss oder Durchschuss (11) in oder durch das Flächengebilde (2) oder durch eine Störung, in zumindest einem der Messkanäle (5, 6)eine Abweichung des gemessenen ersten und/oder zweiten elektrischen Parameters von einem vorgebbaren Sollwert um mehr als einen vorgebbaren Toleranzwert und/oder ein Kurzschluss zwischen den Messkanälen (5, 6) festgestellt wird.

## Claims

1. An arrangement with at least one shot source (9) and at least one detector device (1), wherein the detector device (1) has at least one two-dimensional structure (2) for recognising at least one entering or penetrating shot (11) caused by the shot source (9) into or through the two-dimensional structure (2), and at least one evaluation device (7), wherein the two-dimensional structure (2) has at least two electrically conductive layers (3) and at least one electrically separating, in particular isolating, layer (4), wherein one of the electrically conductive layers (3) is arranged on a side of the electrically separating layer (4) which faces the shot source (9) and another one of the electrically conductive layers (3) is arranged on a side of the electrically separating layer (4) which is remote from the shot source (9), and wherein the electrically separating layer (4) has a higher specific ohmic resistance than the electrically conductive layers (3), **characterised in that** the detector device (1) has at least two measuring channels (5, 6), wherein the evaluation device (7) with one of the measuring channels (5) monitors at least a first electrical parameter in one of the electrically conductive layers (3) and with another one of the measuring channels (6) monitors at least a second electrical parameter in another one of the electrically conductive layers (3), preferably permanently, and the detector device (1) additionally has a third measuring channel (27) which monitors a third electrical parameter between the one of the measuring channels (5) and the other one of the measuring channels (6), preferably permanently.

2. An arrangement according to Claim 1, **characterised in that** the evaluation device (7) has at least one signal output (8) for emitting a warning and/or shut-off signal.

3. An arrangement according to Claim 1 or 2, **characterised in that** the first and/or the second and/or the third electrical parameter is an electric current and/or an electric voltage and/or an ohmic resistance and/or an electrical short circuit between the measuring channels (5, 6, 27).

4. An arrangement according to one of Claims 1 to 3, **characterised in that** in each case electrically conductive layers (3) which are adjacent to one another and separated from one another by an electrically separating layer (4) are associated with measuring channels (5, 6) which are different from each other.

5. An arrangement according to one of Claims 1 to 4, **characterised in that** the two-dimensional structure (2) is a wall element or a flexible curtain.

6. An arrangement according to one of Claims 1 to 5, **characterised in that** the two-dimensional structure (2) has at least three electrically conductive layers (3), with in each case at least one electrically separating layer (4) being arranged between in each case two of the electrically conductive layers (3), and one of the electrically conductive layers (3) being arranged on a side of the electrically separating layers (4) which faces the shot source (9) and another one of the electrically conductive layers (3) being arranged on a side of the electrically separating layers (4) which is remote from the shot source (9).

7. An arrangement according to Claim 6, **characterised in that** the two outer ones of the electrically conductive layers (3) are electrically connected in series with each other and belong to the same measuring channel (5) which monitors the first electrical parameter, and/or **in that** the other one of the measuring channels (6) is connected to the central one of the electrically conductive layers (3) and monitors the second electrical parameter there.

8. An arrangement according to one of Claims 1 to 7, **characterised in that** the electrically conductive layers (3) in each case lie directly on the electrically separating layer (4) or layers (4) arranged next to them and/or lie with the full surface of one of their surfaces on the electrically separating layer (4) or layers (4) arranged next to them, the surfaces of the electrically conductive layers (3) being specified by the length and width thereof and the thickness of the respective electrically conductive layers (3) being less than the length thereof and than the width thereof.

9. An arrangement according to one of Claims 1 to 8, **characterised in that** the electrically conductive layers (3) and the electrically separating layer (4) or the electrically separating layers (4) are joined together, preferably glued together, and form a multilayer body which is internally connected, preferably over the full surface.

10. A method for operating an arrangement according to one of Claims 1 to 9, **characterised in that** with the evaluation device (7) with one of the measuring channels (5) the first electrical parameter in one of the conductive layers (3) is monitored and with another one of the measuring channels (6) the second electrical parameter in another one of the conductive layers (3) is monitored, preferably permanently.

11. A method according to Claim 10, **characterised in that** the evaluation device (7) has a signal output (8) and a warning and/or shut-off signal is emitted by the evaluation device (7) by way of the signal output (8) if, due to an entering or penetrating shot (11) into or through the two-dimensional structure (2) or due to a disruption, in at least one of the measuring channels (5, 6) a deviation of the measured first and/or second electrical parameter from a specifiable desired value by more than a specifiable tolerance value and/or a short circuit between the measuring channels (5, 6) is detected by the evaluation device (7).

## Revendications

1. Ensemble comportant au moins une source de tir (9) et au moins un dispositif de détection (1), dans lequel le dispositif de détection (1) présente au moins une structure plate (2) pour la détection d'au moins un tir pénétrant ou traversant (11) provoqué par la source de tir (9) dans ou à travers la structure plate (2) et au moins un dispositif d'évaluation (7), dans lequel la structure plate (2) présente au moins deux couches électriquement conductrices (3) et au moins une couche, électriquement séparatrice (4), en particulier isolante, dans lequel une des couches électriquement conductrices (3) est agencée sur un côté tourné vers la source de tir (9) de la couche électriquement séparatrice (4) et une autre des couches électriquement conductrices (3) est agencée sur un côté opposé à la source de tir (9) de la couche électriquement séparatrice (4) et dans lequel la couche électriquement séparatrice (4) présente une résistance ohmique spécifique plus élevée que les couches électriquement conductrices (3), **caractérisé en ce que** le dispositif de détection (1) présente au moins deux canaux de mesure (5, 6), dans lequel le dispositif d'évaluation (7) surveille, de préférence en permanence, avec un des canaux de mesure (5) au moins un premier paramètre électrique dans une des couches électriquement conductrices (3) et avec un autre des canaux de mesure (6) au moins un deuxième paramètre électrique dans une autre des couches électriquement conductrices (3) et le dispositif de détection (1) présente en outre un troisième canal de mesure (27), lequel surveille, de préférence en permanence, un troisième paramètre électrique entre l'un des canaux de mesure (5) et l'autre des canaux de mesure (6).

2. Ensemble selon la revendication 1, **caractérisé en ce que** le dispositif d'évaluation (7) présente au moins une sortie de signal (8) pour la délivrance d'un signal d'avertissement et/ou de coupure.

3. Ensemble selon la revendication 1 ou 2, **caractérisé en ce que** le premier et/ou le deuxième et/ou le troisième paramètre électrique est un courant électrique et/ou une tension électrique et/ou une résistance ohmique et/ou un court-circuit électrique entre les canaux de mesure (5, 6, 27).

4. Ensemble selon l'une quelconque des revendications 1 à 3, **caractérisé en ce que** des couches électriquement conductrices (3) respectivement adjacentes les unes aux autres et séparées les unes des autres par une couche électriquement séparatrice (4) sont associées à des canaux de mesure (5, 6) différents les uns des autres.

5. Ensemble selon l'une quelconque des revendications 1 à 4, **caractérisé en ce que** la structure plate (2) est un élément mural ou un rideau souple.

6. Ensemble selon l'une quelconque des revendications 1 à 5, **caractérisé en ce que** la structure plate (2) présente au moins trois couches électriquement conductrices (3), dans lequel respectivement au moins une couche électriquement séparatrice (4) est agencée entre respectivement deux des couches électriquement conductrices (3) et une des couches électriquement conductrices (3) est agencée sur un côté tourné vers la source de tir (9) des couches électriquement séparatrices (4) et une autre des couches électriquement conductrices (3) est agencée sur un côté opposé à la source de tir (9) des couches électriquement séparatrices (4).

7. Ensemble selon la revendication 6, **caractérisé en ce que** les deux couches extérieures des couches électriquement conductrices (3) sont reliées électriquement en série l'une avec l'autre et appartiennent au même canal de mesure (5), lequel surveille le premier paramètre électrique et/ou **en ce que** l'autre des canaux de mesure (6) est raccordé à la couche médiane des couches électriquement conductrices (3) et y surveille le deuxième paramètre électrique.

8. Ensemble selon l'une quelconque des revendications 1 à 7, **caractérisé en ce que** les couches électriquement conductrices (3) s'appliquent respectivement directement sur la couche (4) ou les couches électriquement séparatrices (4) agencées à côté et/ou s'appliquent sur toute la surface avec une de leurs surfaces sur la couche (4) ou les couches électriquement séparatrices (4) agencées à côté, dans lequel les surfaces des couches électriquement conductrices (3) sont prédéfinies par leur longueur et largeur et l'épaisseur des couches électriquement conductrices (3) respectives est plus petite que leur longueur et que leur largeur.

9. Ensemble selon l'une quelconque des revendications 1 à 8, **caractérisé en ce que** les couches électriquement conductrices (3) et la couche électriquement séparatrice (4) ou les couches électriquement séparatrices (4) sont reliées les unes aux autres, de préférence collées les unes aux autres et forment un corps multicouche cohérent en soi, de préférence sur toute la surface.

10. Procédé de fonctionnement d'un ensemble selon l'une quelconque des revendications 1 à 9, **caractérisé en ce que** le premier paramètre électrique est surveillé, de préférence en permanence, dans une des couches conductrices (3) avec le dispositif d'évaluation (7) avec un des canaux de mesure (5) et le deuxième paramètre électrique est surveillé, de préférence en permanence, dans une autre des couches conductrices (3), avec un autre des canaux de mesure (6).

11. Procédé selon la revendication 10, **caractérisé en ce que** le dispositif d'évaluation (7) présente une sortie de signal (8) et un signal d'avertissement et/ou de coupure est délivré par le dispositif d'évaluation (7) par le biais de la sortie de signal (8), lorsqu'un écart du premier et/ou deuxième paramètre électrique mesuré par rapport à une valeur de consigne pouvant être prédéfinie de plus d'une valeur de tolérance et/ou un court-circuit entre les canaux de mesure (5, 6) est constaté par le dispositif d'évaluation (7), conditionné par un tir pénétrant ou un tir traversant (11) dans ou à travers la structure plate (2) ou par une perturbation, dans au moins un des canaux de mesure (5, 6).
